# EUROPEAN PATENT SPECIFICATION

(11) **EP 1 813 708 B1**
(45) Date of publication and mention of the grant of the patent: **20.02.2019**
(21) Application number: 06121677.6
(22) Date of filing: 03.10.2006
(51) Int. Cl.: D06F 39/02

(54) **DOSING AND DISPENSING DEVICE**
DOSIER- UND ABGABEVORRICHTUNG
DISPOSITIF DOSEUR ET DISPENSEUR

(30) Priority: 31.01.2006 EP 06101065
(43) Date of publication of application: 01.08.2007
(73) Proprietor: The Procter & Gamble Company, Cincinnati, OH 45202 (US)
(72) Inventor: Etesse, Jean-Francois, 1040, Brussel (BE); Smith, Carol, 1060, Brussel (BE); Van den Wouwer, Chris, 2100, Deurne (BE)
(74) Representative: Siddiquee, Sanaul Kabir

(56) References cited:
- EP-A1- 0 679 752
- DE-U1- 9 103 668
- ES-A1- 9 100 004
- US-A- 4 190 168
- US-A- 5 945 183
- US-A1- 2003 052 138

## Description

### Technical Field

The present invention relates to a dosing and dispensing device for use within a washing machine.

### Background of the Invention

Dispensing devices which are useful for machine washing of clothes are described in, for example, FR-A-2 563 250, published on 25th October 1985 and in EP 0 679 752 A1.

It is known that, in order to obtain a good degree of cleanliness whilst minimizing wastage it is important to dose the right amount of product. This is commonly achieved by embossed dosing lines marks on the dispensing device but these are difficult to read because the lines and the background are made of the same material and color resulting in a low contrast. Accurate dosing is made even more difficult with transparent or translucent liquid products that provide little or no contrast against which embossed dosing lines can be read.

The requirements of resistance to boil wash and need for transparency have ruled out conventional labelling technology such as wet glue labels, self-adhesive labels, or in mold labels for dosing devices.

One technology which has been used with success is hot stamping, but this is expensive, requires dedicated equipment and only works with flat surfaces on the device. Hot stamping however does not allow large and multicolour printing on the device and as such is not an adequate means of decoration.

The aim of the present invention is to provide a dosing and dispensing device which has accurate dosing lines marking and graphics that are resilient to boil wash and retain the transparency of the device where the sleeve is not printed.

### Summary of the Invention

The present invention provides a dosing and dispensing device according to claim 1.

### Brief Description of the Drawings

Figure 1 shows a dosing ball suitable for use in the present invention.
Figure 2 shows in isomeric view the same ball as in Figure 1.
Figure 3 shows a sleeve printed with dosing lines suitable for sleeving around the dosing ball shown in Figures 1 and 2.
Figure 4 shows the finished device according to the present invention consisting of the dosing ball and printed sleeve.

### Detailed Description of the Invention

The invention relates to a decorated reusable dosing and dispensing device for washing machines where the means of marking and decoration is a plastic sleeve. The term "dosing and dispensing device", or "dosing device" for short, herein should be understood generally as a means for providing measured quantities of fluid products into a washing machine. The term "fluid products" includes liquids or gels as well as flowing materials such as powders or granules.

The dosing device has a base. By a base it should be understood a part of the device on which the device is left to stand up-right. This part my be flat, or may for example be formed from a moulded tripod, or from a flat ring. Many types of "base" are known in the art, the main feature of such a base being to hold the device in a stable position on a flat supporting surface. The base comprises a base wall. The device also has a major axis which is generally perpendicular to the plane of the base.

The device also comprises sides. The sides are the surfaces which, in general terms, join the top and the base of the bottle. Typically, when the device is upright, the sides are substantially vertical and perpendicular to the base. The sides may also have a curved or relatively complex shape depending on the device considered. The base and side-walls define a hollow cavity, which is capable of containing a liquid product within the solid walls defining the hollow cavity.

The device further comprises a top part. The top part is typically the part of the device opposed to the base. The top is commonly the part of the device which is provided with an aperture for dosing the laundry product. The aperture is generally provided without a closure so that the device can be nested on top of a bottle when not used during the washing process.

The device may be formed by any convenient means, blow-molding being the most commonly used. Preferably the device has an internal volume of at least 20ml and of less than 500ml, and more preferably less than 300 ml.

Further, the device is sleeved. Whilst any process can be used to attach the sleeve around the outside of the dosing device, preferred processes are shrink-sleeving and stretch-sleeving. In these processes the sleeve is generally formed by forming the plastic film essentially into a tube, preferably by folding the film back upon itself and forming a seam, and cutting the tube to form individual sleeves.

Shrink-sleeving is mostly used in the drinks industry, whereby a sleeve of thermo-plastic material may be stretched or shrunk all around a beverage bottle, thus offering an extended area which may be used for any type of graphics. Typical thermoplastic materials used for stretch or shrink sleeving include polyvinylchloride (PVC); low or high density polyethylene (LDPE, HDPE); polyester teraphthalate (PET); polypropylene (PP) and oriented polypropylene (OPP); polystyrene (PS) and oriented polystyrene (OPS); and mixtures thereof.

Stretch-sleeving entails placing a stretchable sheath on a reel and forming a tubular sheath made from stretchable plastic material of the dimension required to fit the product. We often find that the use of stretch sleeving for provision of decorative or informative packaging on products has the benefit of increased economy since inexpensive film materials such as low density polyethylene (LDPE) or low density polyethylene / ethyl vinyl acetate (EVA) blends or co-extrusions may be sued for the polymeric film sleeve. Such processes and typical applications are described in US 2004/0182501 or WO 03/037745.

Shrink-sleeving or stretch-sleeving consists in enveloping a part of the device in a tube-like flexible sleeve. Preferably the material of the sleeve is thermoplastic, and the sleeve is heated to shrink closely around the outer surface of the device or in the case of a stretch sleeve stretched to the dimensions required to fit around the device. The sleeve may be made from a single film of plastic, or laminated in two or more layers. The plastic film may be either coloured or glass clear transparent glossy film which will be printed upon, or, alternatively, in the case of a laminated film, at least one layer of film may be pigmented by the addition of dyes or pigments before or at the point of extruding the laminate. The plastic film may also be decorated with colours, designs, logos, usage instructions, health and regulatory symbols and warnings, and other written or graphical information. Preferably the indicia comprise at least one indication of dosing volume or dosing weight. More preferably the indicia comprise at least one indication of dosing volume or dosing weight positioned within or close to a transparent window in the sleeve in order to facilitate measurement of the desired dose. Accurate dosing is facilitated by the contrast between the dosing indicia and the product to be dosed, especially if the product is a transparent or translucent liquid, i.e. has a light transmittance greater than 25% at wavelength of 410-800nm.

Many different printing processes may be used to print on the film, but gravure and flexography are preferred, utilizing continuous web substrate. Gravure is an intaglio process, in that the printing image is formed below the surface of the printing medium. A cylinder is engraved utilizing the art for the particular shrink or stretch sleeve label. Flexography is a relief printing process developed from the letterpress principle. The printing image is produced on a photopolymer plate, in which the image is physically above the non-image area.

The characteristics on the inks desired in the present invention include visual appearance, durability, color steadfastness and strong adhesion quality. Both water and solvent based inks have been found suitable for application in the present invention. To prevent a "wet" look when a shrink or stretch sleeve label is not printed with a tint coating, anti-wet coating is used to eliminate a spotty or water stain appearance when the sleeve label is applied to a container that contains imperfections (voids) on their surface. These imperfections can trap air between the sleeve label and the container surface, giving rise to the spotty or water stain appearance. Anti-wet coating creates breathable channels, allowing the air to escape during the shrinking phase, and thus eliminating the spotty or water stain appearance. Some label designs may have one or more areas that constitute a window devoid of any ink. The content of the device may be viewed through the one or more windows of the film and through the device wall. In such cases, the inner surface of the window areas may have the anti-wet coating.

Preferred inks are nitro-cellulosic inks.

The device according to the invention comprises indicia, which are printed on the sleeve according to one of the following three methods:

A first preferred method, known as reverse printing, is to print the colours on the inside of the sleeve, i.e. the side which will be in contact with the base or side-wall of the dosing device, in order to maintain its glossiness and prevent abrasion and ink transfer to the clothes during the washing process. A second particularly preferred method, known as sandwich printing,
is to reverse print on to the sleeve material and cover the printed sleeve material on the printed side with another sleeve of the same or slightly lower or higher thickness. The inks are entrapped in between, and protected by, two layers of sleeve material.

A particular benefit of sandwich printing is that it helps to prevent slipping of the sleeve around the surface of the dosing ball, and as such helps the sleeve to remain in its original position.

Alternatively, in the case where front "surface" printing is used, then - according to a third method - suitable varnishes will be added on top of the inks layers to protect the inks for the wash liquor and clothes and machine drum abrasion. Said varnishes are acrylic-based varnishes or ultraviolet-cured varnishes.

Preferably the sleeve covers at least 30% of the side-walls of the dosing device, and preferably covers at least 50% of the side-walls of the dosing device, and more preferably covers at least 70% of the side-walls of the dosing device.

In a particularly preferred embodiment of the present invention the sleeve has a cut-out region that is juxtaposed with the pre-treating region of the device. This allows decoration of a dosing device with a pre-treat slit or roll-on applicator.

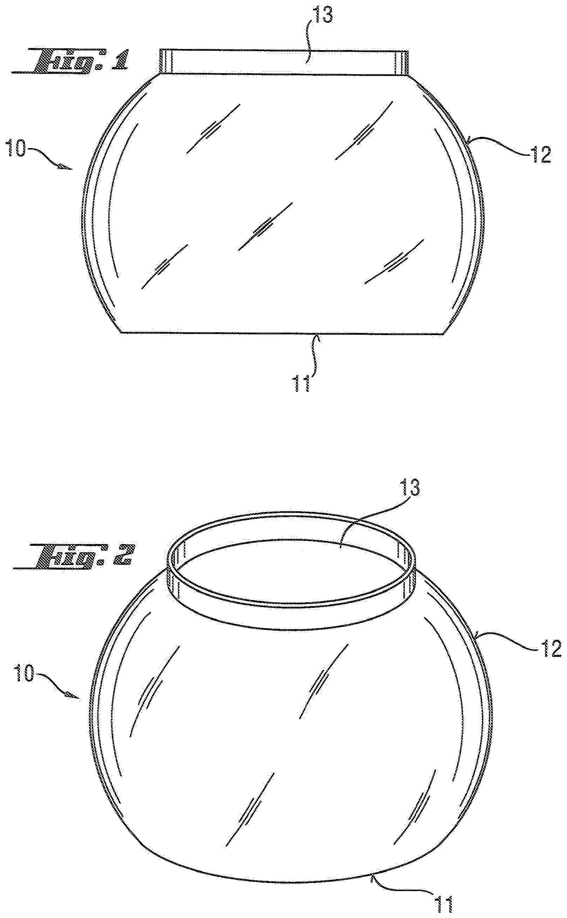

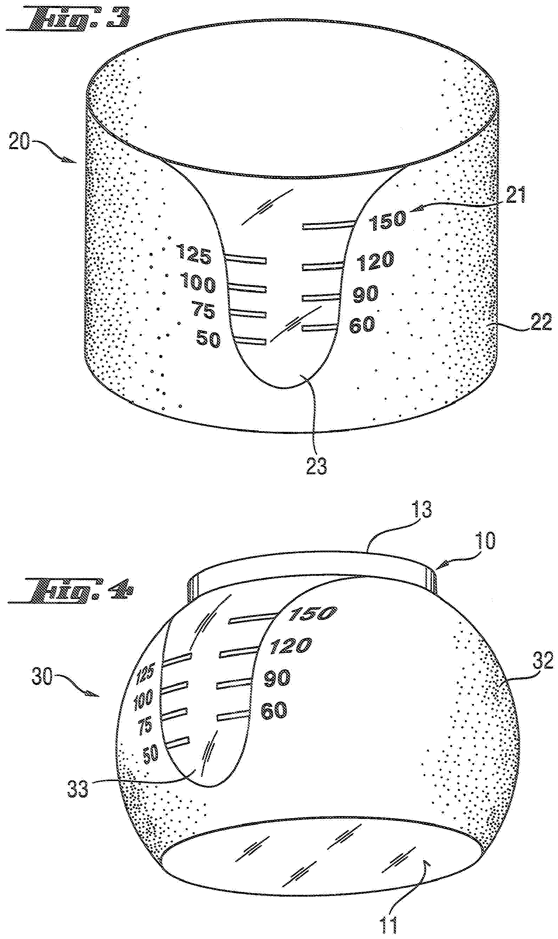

A typical device according to the present invention comprises a dosing ball as illustrated in Figures 1 and 2 and a sleeve as illustrated in Figure 3. The dosing ball 10 shown in Figures 1 and 2 comprises a base 11 and side-walls 12 which define a hollow cavity. The hollow cavity is in direct communication with the outside of the dosing ball 10 by means of an open aperture at the top 13. Viewed from the outside, the three-dimensional shape of the dosing ball 10 is substantially spherical with a flat base 11 and open top 13.

Figure 3 shows a sleeve 20 with indicia 21 marked thereon. In this example the indicia comprise a largely coloured surface 22 and a transparent window 23. Around the edge of the transparent window dosing lines indicate 50, 60, 75, 90, 100, 120, 125 and 150 ml.

Figure 4 shows a dosing and dispensing device 30 according to the present invention comprising the dosing ball 10 shown in Figures 1 and 2 with the sleeve 20 shown in Figure 3 covering the side-wall. The sleeve is brought into close proximity with the side-wall by shrink-sleeving, or, alternatively, by stretch-sleeving. In Figure 4 the shrunken sleeve 32 is shown covering substantially 100% of the side-wall. The transparent window 33 provides the means for the user to see the level of detergent which is within the hollow cavity of the dosing device, and thus enables the user to measure the desired dose.

The methods disclosed below do not form part of the invention.

Method of Use. The dosing device of the present invention is filled with detergent, preferably liquid detergent, up to required level indicated by the dosing lines printed on the sleeve. Once the filling operation has been completed and the fabrics have been arranged in the drum of the washing machine, the device filled with detergent is then introduced onto the fabrics present in the drum. Once the machine has been started, the product held in the ball is dispensed into the wash by the rotation of the drum. After washing, the device is retrieved from the drum and ready for the next use. Colors and marking remain intact even after numerous washes.

Alternatively consumers may wish to remove the sleeve prior to using in the washing machine. This could be because the consumer is washing particularly expensive or delicate garments and wants to eliminate any risk of damage to the garment, for example in case the sleeve detaches in the wash. Alternatively this could be because the consumer wishes to use a drying cycle after the wash cycle and does not wish to look for the dosing ball in the wash load in order to remove it. The sleeved dosing ball may not be compatible with extended drying cycles at high temperature and thus it is important to have the ability to remove the sleeve. In a preferred embodiment of the present invention the sleeve can incorporate a line of weakness, such as a perforation, and appropriate marking to facilitate tearing off of the sleeve before use.

In a further preferred embodiment of the method of the present invention an additional step is introduced, between steps i) and ii), of pretreating stained or soiled laundry with a portion of the measured laundry liquid.

## Claims

1. A dosing and dispensing device (10) for use within a washing machine, said dosing and dispensing device (10) comprising a hollow cavity defined by a base (11) and side-walls (12), wherein the base (11) and/or side walls (12) are at least partly covered by a sleeve (20), and wherein the sleeve (20) comprises a film of material comprising printed indicia (21) thereupon, wherein the printed indicia (21) are resistant to removal from the film when the dosing and dispensing device (10) is exposed to wash conditions inside a washing machine.
wherein the indicia are:
a) printed onto the film by reverse printing so that the printed indicia (21) lie on the side of the film which is in contact with the base (11) or side-wall (12); or
b) printed by sandwich printing so that the printed indicia (21) lie between two films; or
c) printed onto the side of the film which is not in contact with the base (11) or side-wall (12), and wherein the printed indicia (11) are protected by varnish which is acrylic-based varnish or ultraviolet-cured varnish.

## Patentansprüche

1. Dosierungs- und Abgabevorrichtung (10) zur Verwendung in einer Waschmaschine, wobei die Dosierungs- und Abgabevorrichtung (10) einen Hohlraum umfasst, der durch eine Basis (11) und Seitenwände (12) definiert wird, wobei die Basis (11) und/oder die Seitenwände (12) wenigstens teilweise von einer Hülse (20) bedeckt sind, und wobei die Hülse (20) eine Folie aus einem Material umfasst, das aufgedruckte Zeichen (21) darauf umfasst, wobei die aufgedruckten Zeichen (21) einem Entfernen aus der Folie widerstehen, wenn die Dosierungs- und Abgabevorrichtung (10) Waschbedingungen in einer Waschmaschine ausgesetzt wird.
wobei die Zeichen:
a) durch Umkehrdrucken auf die Folie derart aufgedruckt sind, dass die aufgedruckten Zeichen (21) auf der Seite der Folie liegen, die mit der Basis (11) oder Seitenwand (12) in Kontakt steht; oder
b) durch Sandwichdrucken derart aufgedruckt sind, dass die aufgedruckten Zeichen (21) zwischen zwei Folien liegen; oder
c) auf die Seite der Folie aufgedruckt sind, die nicht mit der Basis (11) oder der Seitenwand (12) in Kontakt steht, und wobei die aufgedruckten Zeichen (11) durch Lack geschützt sind, bei dem es sich um Lack auf Acrylbasis oder um UVgehärteten Lack handelt.

## Revendications

1. Dispositif de dosage et de distribution (10) pour une utilisation au sein d'un lave-linge, ledit dispositif de dosage et de distribution (10) comprenant une cavité creuse définie par une base (11) et des parois latérales (12), dans lequel la base (11) et/ou les parois latérales (12) sont au moins partiellement couvertes par un manchon (20), et dans lequel le manchon (20) comprend un film de matériau comprenant des éléments visuels imprimés (21) sur celui-ci, dans lequel les éléments visuels imprimés (21) sont résistants à un enlèvement du film lorsque le dispositif de dosage et de distribution (10) est exposé à des conditions de lavage à l'intérieur d'un lave-linge.
dans lequel les éléments visuels sont :
a) imprimés sur le film par impression en transparence de sorte que les éléments visuels imprimés (21) se trouvent sur le côté du film qui est en contact avec la base (11) ou la paroi latérale (12) ; ou
b) imprimés par impression en sandwich de sorte que les éléments visuels imprimés (21) se trouvent entre deux films ; ou
c) imprimés sur le côté du film qui n'est pas en contact avec la base (11) ou la paroi latérale (12), et dans lequel les éléments visuels imprimés (11) sont protégés par un vernis qui est un vernis à base d'acrylique ou un vernis durci par ultraviolets.
